# EUROPEAN PATENT APPLICATION

(11) **EP 3 936 349 A1**
(43) Date of publication of application: **12.01.2022**
(21) Application number: 21184368.5
(22) Date of filing: 07.07.2021
(51) Int. Cl.: B60C 5/20, B60C 29/06, B29C 73/16, B60C 29/02, B60S 5/04

(54) **AIR PIPE DEVICE OF AIR COMPRESSOR**

(30) Priority: 07.07.2020 TW 109122935
(71) Applicant: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Lang, Christian

(57) **Abstract**

An air pipe device of an air compressor contains a connector (93) of an air pipe (92) configured to output fluid pressure so as to inflate airs and to feed sealant when the air compressor operates. The air pipe device contains a connection pipe (1), and the connection pipe (1) includes an open segment (11) defined on a first end thereof and configured to connect with the connector (93) of the air pipe (92) of the air compressor. In addition, the connection pipe (1) includes a stop segment (12) formed on a second end thereof, such that the connection pipe (1) is configured to connect a twin tire with the connector (93) of the air compressor so as to inflate airs and feed sealant.

## Description

### FIELD OF THE INVENTION

The present invention relates to an air pipe device of an air compressor which is configured to feed sealant and inflate airs to a broken twin tire.

### BACKGROUND OF THE INVENTION

A conventional air compressor is portable onto a vehicle so as to inflate airs and to feed sealant into a broken tire.

However, when desiring to inflate airs and feed sealant into a broken twin tire inclusive of an internal tire and an internal tire, it is troublesome to inflate airs and feed sealant into the internal tire and the external tire of the twin tire. For example, a first nozzle of the internal tire is back to a central axis between a front end and a rear end of the vehicle, so it is difficult for a user to manually connect a connector of a connection pipe with the first nozzle of the internal tire. Moreover, a second air nozzle of the external tire faces to the central axis of the vehicle. In other words, the second air nozzle of the external tire is back to the user's eyes, so it is difficult to manually extend the air pipe into the through orifice of the rim of the external tire and to rotate the connector of the connection pipe reversely, thus screwing the connector with the second nozzle of the external tire. However, a flexible hose bends excessively when rotating the air pipe of the air compressor to stop inflating the airs into the twin tire.

The present invention has arisen to mitigate and/or obviate the afore-described disadvantages.

### SUMMARY OF THE INVENTION

The primary aspect of the present invention is to provide an air pipe device of an air compressor by which a connector of an air pipe of the air compressor is configured to inflate airs and to feed sealant, wherein the connection pipe includes an open segment defined on a first end thereof and configured to connect with the connector of the air pipe of the air compressor, and the connection pipe includes a stop segment formed on a second end thereof and configured to connect with an air nozzle of the twin tire, such that the connection pipe connects the twin tire with the connector of the air compressor so as to inflate the airs and feed the sealant.

Further aspect of the present invention is to provide an air pipe device of an air compressor which contains the connection pipe being rigid, and the connection pipe includes a first end having male threads to screw with the connector of the air pipe of the air compressor, and a second end having female threads to screw with a first air nozzle of an internal tire, the open segment has the male threads and a check mechanism having an air core, and the stop segment has the female threads and accommodates the turning-on mechanism having a post, and the stop segment of the connection pipe is connected with the first air nozzle of the internal tire.

Another aspect of the present invention is to provide an air pipe device of an air compressor which contains a connection pipe having a flexible hose, a resilient cylinder fitted on the flexible hose, wherein the connection pipe includes the open segment defined on the first end thereof and having male threads, the connection pipe has the check mechanism received therein and an air core mounted on the check mechanism so as to screw with the connector of the air pipe of the air compressor, the stop segment has female threads formed on an inner wall thereof and accommodates the turning-on mechanism having a post, and the stop segment of the connection pipe is connected with a second air nozzle of the external tire.

### BRIEF DESCRIPTION OF THE DRAWINGS

FIG. 1 is a perspective view showing the assembly of a connection pipe of an air pipe device of an air compressor according to a first embodiment of the present invention.
FIG. 2 is a perspective view showing the exploded components of the connection pipe of the air pipe device of the air compressor according to the first embodiment of the present invention.
FIG. 3 is a cross sectional view showing the assembly of the connection pipe of the air pipe device of the air compressor according to the first embodiment of the present invention.
FIG. 4 is a perspective view showing the operation of the air pipe device of the air compressor according to the first embodiment of the present invention.
FIG. 5 is a cross sectional view showing the operation of the air pipe device of the air compressor according to the first embodiment of the present invention.
FIG. 6 is another cross sectional view showing the operation of the air pipe device of the air compressor according to the first embodiment of the present invention.
FIG. 7 is a perspective view showing the assembly of an air pipe device of the air compressor according to a second embodiment of the present invention.
FIG. 8 is a perspective view showing the exploded components of the connection pipe of the air pipe device of the air compressor according to the second embodiment of the present invention.
FIG. 9 is a cross sectional view showing the operation of the connection pipe of the air pipe device of the air compressor according to the second embodiment of the present invention.
FIG. 10 is a perspective view showing the operation of the connection pipe of the air pipe device of the air compressor according to the second embodiment of the present invention.
FIG. 11 is a cross sectional view showing the operation of the connection pipe of the air pipe device of the air compressor according to the second embodiment of the present invention.
FIG. 12 is another cross sectional view showing the operation of the connection pipe of the air pipe device of the air compressor according to the second embodiment of the present invention.

### DETAILED DESCRIPTION OF THE PREFERRED EMBODIMENTS

An air pipe device of an air compressor according to a preferred embodiment of the present invention, a connector 93 of an air pipe 92 outputs fluid pressure or substances when the air compressor operates, and the connector 93 of the air pipe 92 has a turning-on mechanism which includes a post, wherein the post of the turning-on mechanism strikes a connection element in which a check mechanism of an air valve is accommodated so that the turning-on mechanism is in communication with the check mechanism of the air valve, thus flowing the fluid pressure and the substrates. Since the turning-on mechanism and the check mechanism are a well-known art, the embodiments of the present invention disclosed are only for convenience of presentation and not for limitation.

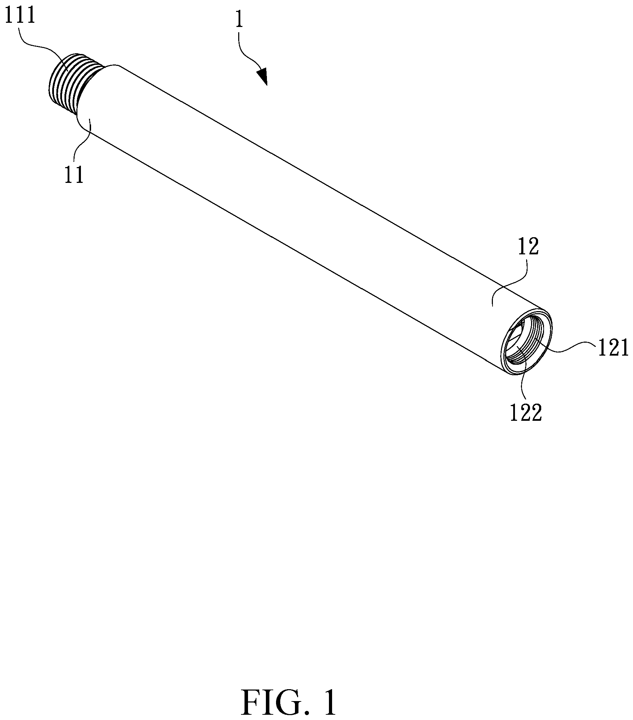

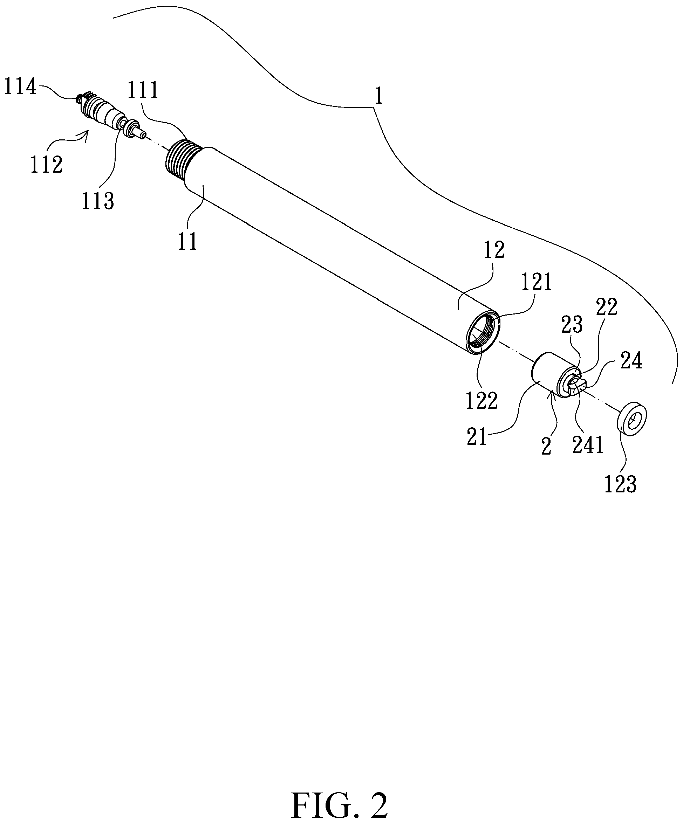

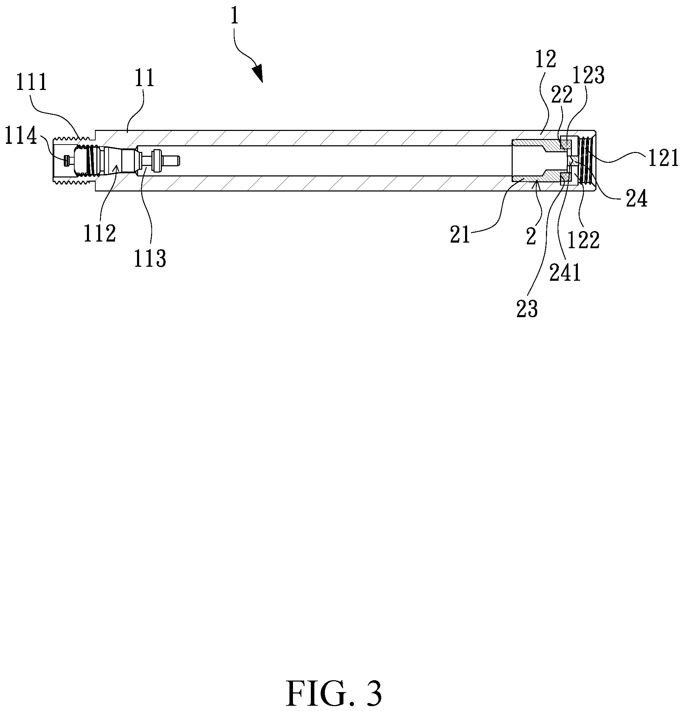

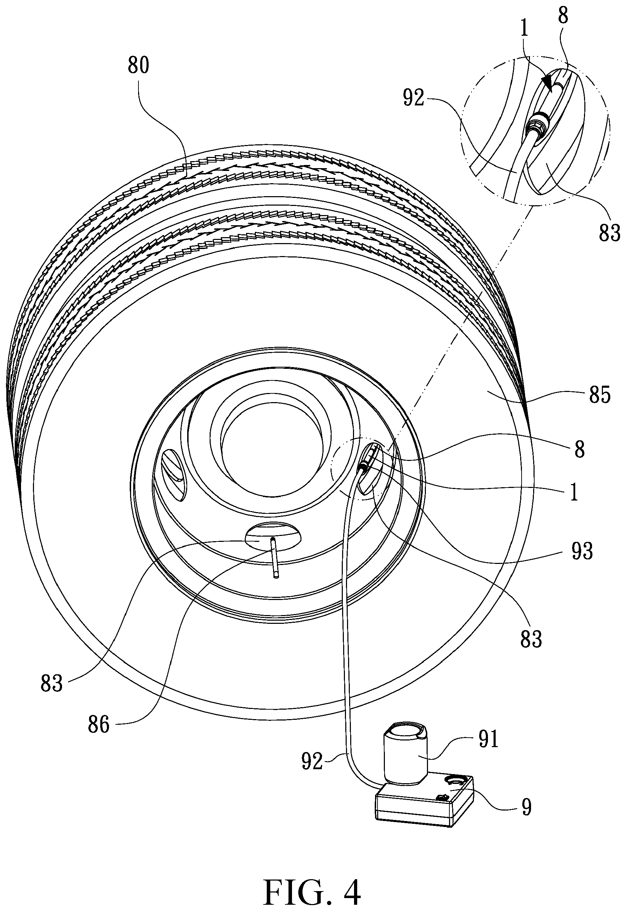

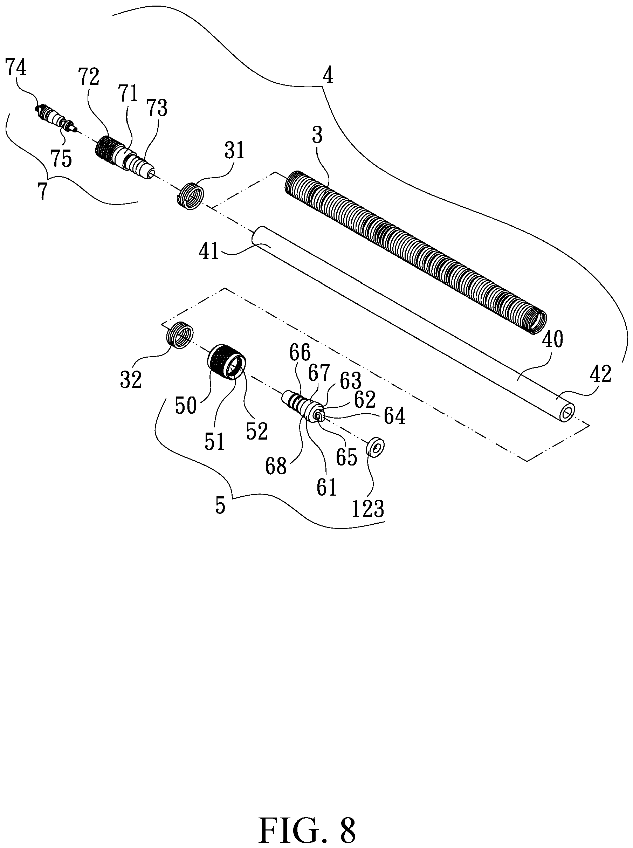

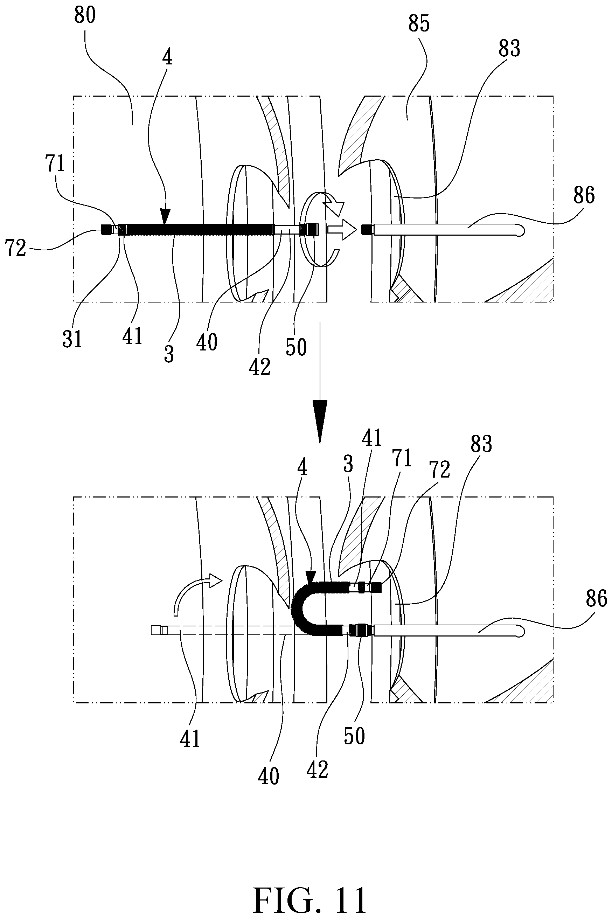

With reference to FIGS. 1-12, the air pipe device of the air compressor according the present invention, the connector 93 of the air pipe 92 of the air compressor (as shown in FIGS. 4-10) is capable of feeding sealant and inflating airs to a broken twin tire. The connection pipe 1 includes an open segment 11 defined on a first end thereof and a stop segment 12 formed on a second end of the connection pipe 1. The open segment 11 of the connection pipe 1 has male threads 111 formed thereon, the connection pipe 1 has the check mechanism 112 received therein, and the connection pipe 1 includes an air core 114 mounted on the check mechanism 112. The stop segment 12 has female threads 121 formed on an inner wall thereof and accommodates the turning-on mechanism 2 having the post 24, and a seal ring 123 is fitted on an outer wall of the post 24.

The air compressor is received in a box 9 and is configured to inflate the airs or is connected with a sealant supply 91, as shown in FIG. 4.

Referring to FIGS. 1-3, in a first embodiment, the connection pipe 1 is rigid, and the connection pipe 1 includes the open segment 11 defined on the first end thereof and the stop segment 12 formed on the second end of the connection pipe 1, wherein the open segment 11 has male threads 111, and the close segment 12 has female threads 12. The stop segment 12 of the connection pipe 1 has a positioning orifice 122 defined thereon.

The turning-on mechanism 2 includes a column 21 accommodated in the positioning orifice 122, an annular section 22 formed on an end of the column 21 and having a diameter less than a diameter of the column 21, a contact fringe 23 defined between the column 21 and the annular section 22, and the post 24 extending outward inside the annular section 22, wherein at least one conduit 241 is defined between the post 24 and the annular section 22, and the at least one conduit 241 is in communication with the connection pipe 1, wherein the seal ring 123 is put from the positioning orifice 122 of the connection pipe 1 to contact with the contact fringe 23 of the turning-on mechanism 2.

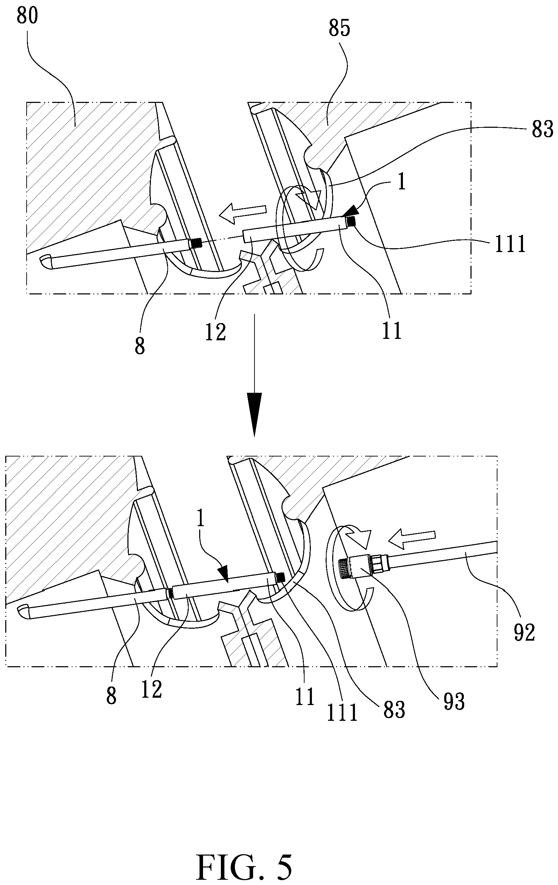

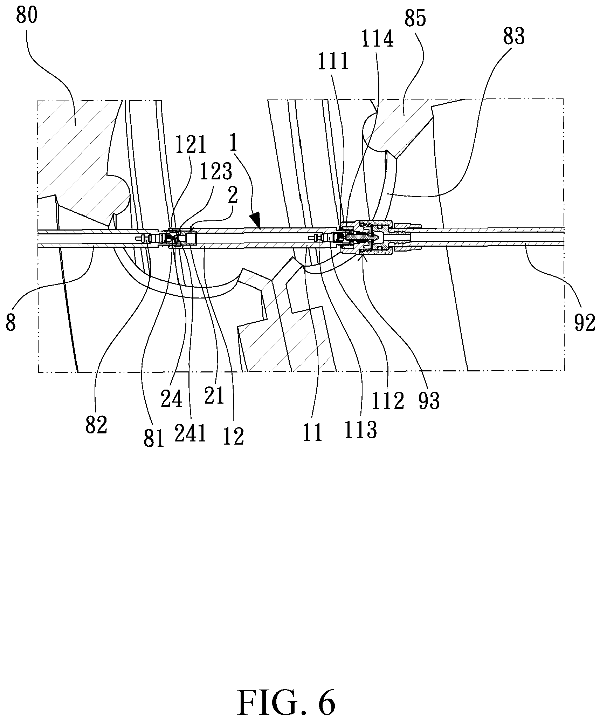

As illustrated in FIGS. 4-6, the twin tire includes an internal tire 80 and an external tire 85, wherein a first air nozzle 8 of the internal tire 80 is located inside the external tire 85. The first air nozzle 8 of the internal tire 80 faces a user, but the external tire 85 interrupts the user to operate the air compressor. Accordingly, the connection pipe 1 is inserted through a through orifice 83 of a rim of the external tire 85 to contact with the first air nozzle 8 of the internal tire 80, and the stop segment 12 of the connection pipe 1 is connected with the first air nozzle 8 of the internal tire 80. The open segment 11 of the connection pipe 1 is connected with the connector 93 of the air pipe 92 of the air compressor, thus feeding the sealant and inflating the airs smoothly. A second air nozzle 86 of the external tire 85 faces a central axis of a vehicle, i.e., back to the user's eyes, so it is difficult to connect the connector 93 of the air pipe 92 of the air compressor with the second air nozzle 86 of the external tire 85. When desiring to inflate the airs or feed the sealant into the internal tire 80 of the twin tire, the stop segment 12 of the connection pipe 1 is connected with the first air nozzle 8 of the internal tire 80, as illustrated in FIGS. 5 and 6, and the post 24 of the turning-on mechanism 2 of the stop segment 12 abuts against and moves the air core 81 of the first air nozzle 8 of the internal tire 80 so that when a valve 82 of the first air nozzle 8 is turned on, the first air nozzle 8 of the internal tire 80 communicates with the connection pipe 1. In other words, the valve 82 of the first air nozzle 8 of the internal tire 80, the at least one conduit 241 of the turning-on mechanism 2 of the stop segment 12, and the connection pipe 1 communicate. Furthermore, the open segment 11 of the connection pipe 1 is configured to avoid a leakage of an air pressure or the sealant from the internal tire 80 so that after the stop segment 12 of the connection pipe 1 is connected with the first air nozzle 8 of the internal tire 80, the connector 93 of the air pipe 92 of the air compressor is connected with the open segment 11 of the connection pipe 1, and the connector 93 abuts against the air core 114 of the check mechanism 112 of the open segment 11 to turn on the valve 113 of the stop mechanism 112, thus feeding the sealant and inflating the airs.

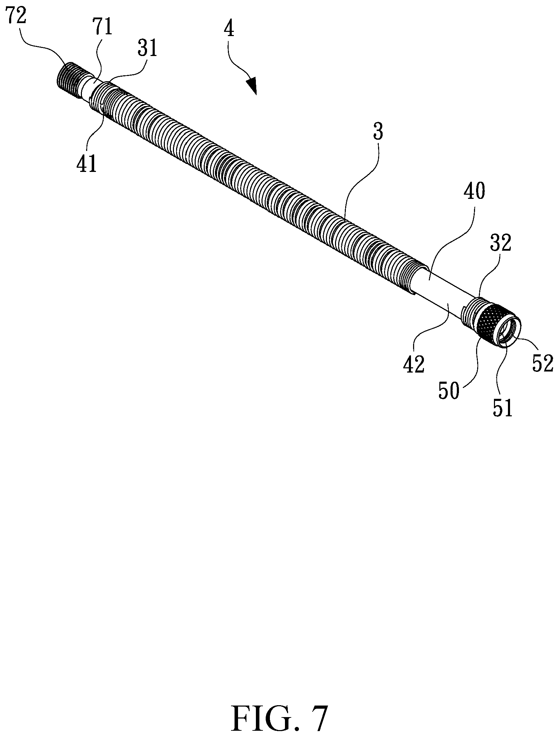

With reference to FIGS. 7-9, a difference of an air pipe device of an air compressor of a second embodiment from that of the first embodiment from comprises: a connection pipe 4 including a flexible hose 40, a resilient cylinder 3 fitted on the flexible hose 40 to protect the flexible hose 40 when the flexible hose 40 bends excessively, such that the flexible hose 40 does not deform to block the sealant and the airs. The flexible hose 40 includes an open segment 41 formed on a first end thereof, and the flexible hose 40 includes a check mechanism 7 defined in the open segment 41. The check mechanism 7 includes a fitting shaft 71 formed on a first end thereof, a male threaded section 72 formed on the fitting shaft 71, and a stepped coupling section 73 extending from a second end of the fitting shaft 71 opposite to the fitting shaft 71, wherein the stepped coupling section 73 of the fitting shaft 71 is fitted on the open segment 41 of the flexible hose 40, and a first defining sleeve 31 is configured to connect the flexible hose 40 with the stepped coupling section 73 of the fitting shaft 71. The flexible hose 40 further includes a stop segment 42 formed on a second end thereof, and the flexible hose 40 includes a turning-on mechanism 5 received in the stop segment 42. The turning-on mechanism 5 includes a bushing 50, a column 61, a seal ring 123, an accommodation chamber 51 defined in the bushing 50, a threaded screw orifice 52 formed on an inner wall of a first end of the bushing 50, a passing orifice 53 defined on a second end of the bushing 50, and a neck 54 formed adjacent to the passing orifice 53, wherein a diameter of the neck 54 is more than a diameter of the passing orifice 53, and the threaded screw orifice 52, the accommodation chamber 51 and the passing orifice 53 communicate.

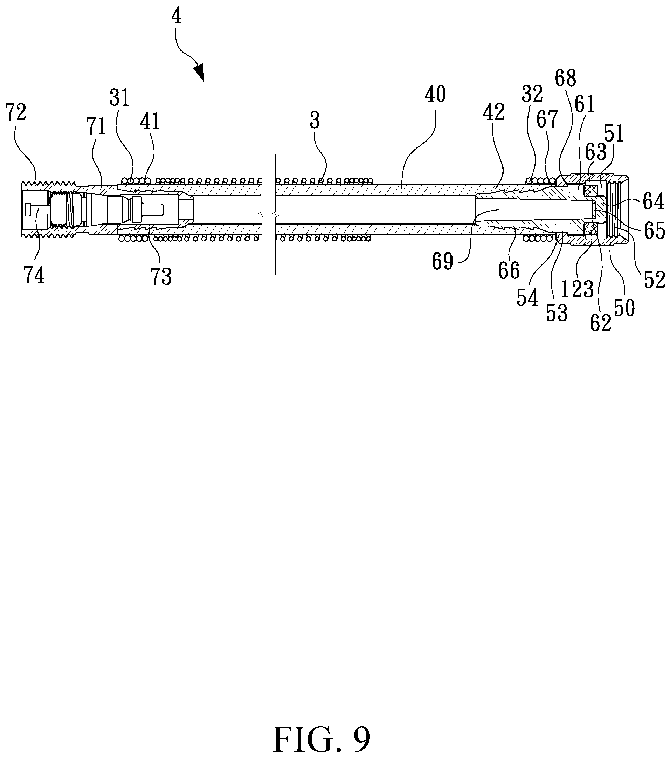

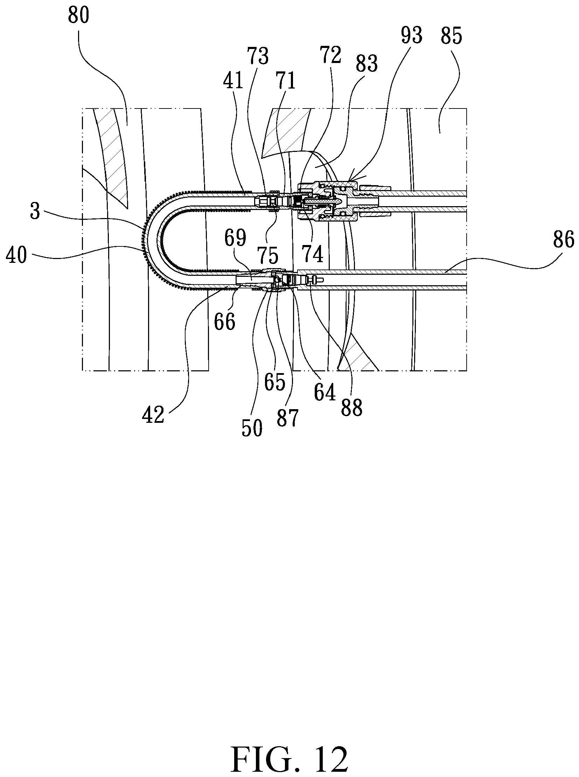

The column 61 has an annular section 62 extending from the column 61, wherein a diameter of the annular section 62 is less than a diameter of the column 61, and a contact fringe 63 is formed between the annular section 62 and the column 61, a post 64 extends from the annular section 62, at least one conduit 65 is defined between the post 64 and the annular section 62, a stepped coupling section 66 extends opposite to the column 61, a recessed section 67 formed on an outer wall of the column 61 proximate to the stepped coupling section 66, wherein a diameter of the column 61 is more than a diameter of the recessed section 67, and a joining shoulder 68 is formed on the recessed section 67 and the column 61, wherein a channel 69 defined between the column 61 and the stepped coupling section 66, and the at least one conduit 65, the channel 69 and the flexible hose 40 communicate. A seal ring 123 is put from the column 64 to contact with the contact fringe 63 of the column 61. The stepped coupling section 66 of the column 61 connected with the seal ring 123 is received in the accommodation chamber 51 from the threaded screw orifice 52 of the bushing 50 via the passing orifice 53 of the neck 54, wherein the neck 54 abuts against the joining shoulder 68 of the column 61, the stepped coupling section 66 of the column 61 exposing outside the bushing 50 is fitted with the stop segment 42 of the flexible hose 40, and a first defining sleeve 32 is configured to connect the flexible hose 40 with the stepped coupling section 66 of the column 61. When the open segment 41 of the flexible hose 40 is not forced by an external force, the check mechanism 7 closes the valve 75 of the air core 74 completely, as illustrated in FIGS. 9 and 12.

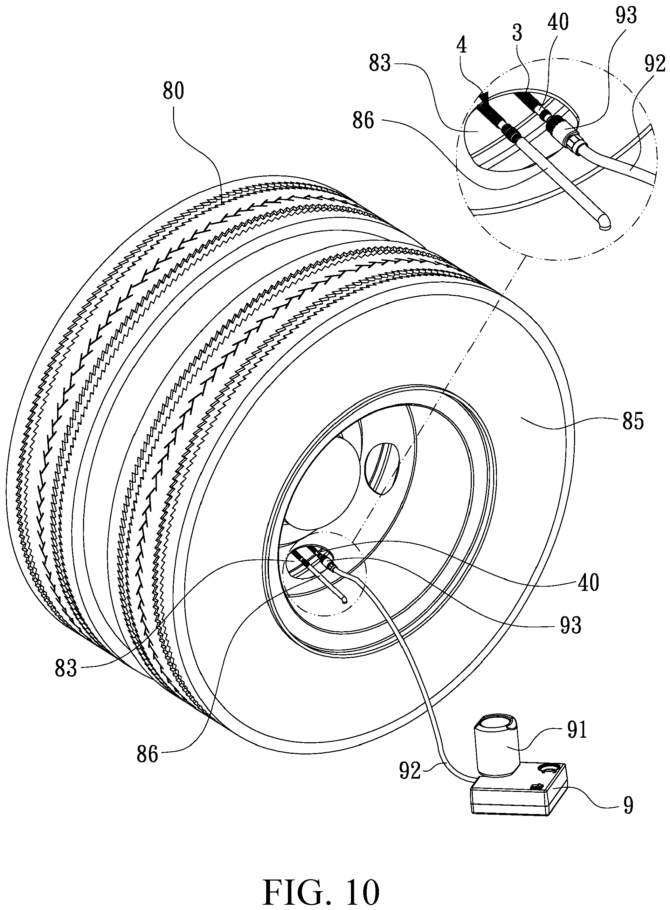

Referring to FIGS. 10-12, when desiring to feed the sealant and inflate the airs into the external tire of the twin tire, the second air nozzle 86 of the external tire 85 faces a central axis of a vehicle, i.e., back to the user's eyes, so the stop segment 42 of the flexible hose 40 is connected with the second air nozzle 86 of the external tire 80, and the post 64 of the turning-on mechanism 5 abuts against and moves the air core 87 of the first air nozzle 86 of the external tire 85 so that when the valve 88 of the first air nozzle 86 is turned on, the second air nozzle 86 of the external tire 85 communicates with the flexible hose 40. In other words, the valve 88 of the first air nozzle 86 of the external tire 85, the at least one conduit 65 and the channel 69 of the column 61 of the stop segment 42, and the flexible hose 40 communicate. Furthermore, the open segment 41 of the flexible hose 40 is configured to avoid a leakage of the airs from the external tire 85 so that after the stop segment 42 of the flexible hose 40 is connected with the second air nozzle 86 of the external tire 85, the open segment 41 of the flexible hose 40 is rotated outside the external tire 85, in the meantime, the flexible hose 40 is protected by the resilient cylinder 3 so that the flexible hose 40 does not bend to block the sealant and the airs. Thereafter, the connector 93 of the air pipe 92 of the air compressor is connected with the open segment 41 of the flexible hose 40, and the connector 93 abuts against the check mechanism 7 of the open segment 41 to turn on the valve 75 of the air core 74, thus feeding the sealant and inflating the airs.

Thereby, the connector 93 of the air pipe 92 of the air compressor is connected with the connection pipe 1 to feed the sealant and inflate the airs. The connection pipe 1 includes the open segment 11 formed on the first end thereof and a stop segment 12 formed in the second end of the connection pipe 1 so that when the stop segment 12 is connected with the air nozzle of the twin tire, the open segment 11 of the connection pipe 1 is configured to avoid the leakage of the airs from the twin tire, and the stop segment 12 of the connection pipe 1 is connected with the air nozzle of the twin ire, and the connector 93 of the air pipe 92 of the air compressor is connected with the open segment 11 of the connection pipe 1 to feed the sealant and inflate the airs. After inflating the airs, the connection pipe 1 is removed from the connector 93, thus stopping the leakage of the airs from the twin tire.

## Claims

1. An air pipe device of an air compressor, a connector (93) of an air pipe (92) outputting fluid pressure from the air compressor so as to inflate airs and to feed sealant when the air compressor operates,
**characterized in that**
the air pipe device comprises a connection pipe (1), the connection pipe (1) includes an open segment (11) defined on a first end thereof and configured to connect with the connector (93) of the air pipe (92) of the air compressor, and the connection pipe (1) includes a stop segment (12) formed on a second end thereof, such that the connection pipe (1) is configured to connect a twin tire with the connector (93) of the air compressor so as to inflate airs and feed sealant.

2. The air pipe device of an air compressor as claimed in claim 1, **characterized in that** the connection pipe (1) is rigid, and the connection pipe (1) includes the open segment (11) defined on the first end thereof and having male threads (111), the connection pipe (1) has the check mechanism (112) received therein and an air core (114) mounted on the check mechanism (112), wherein the open segment (11) is screwed with the connector (93) of the air pipe (92) of the air compressor, the stop segment (12) has female threads (121) formed on an inner wall thereof and accommodates the turning-on mechanism (2) having a post (24), and the stop segment (12) of the connection pipe (1) is connected with the first air nozzle (8) of the internal tire (80).

3. The air pipe device of an air compressor as claimed in claim 2, **characterized in that** the stop segment (12) of the connection pipe (1) has a positioning orifice (122) defined thereon, wherein the turning-on mechanism (2) includes a column (21) accommodated in the positioning orifice (122), an annular section (22) formed on an end of the column (21) and having a diameter less than a diameter of the column (21), a contact fringe (23) defined between the column (21) and the annular section (22), and the post (24) extending outward inside the annular section (22), wherein at least one conduit (241) is defined between the post (24) and the annular section (22), and the at least one conduit (241) is in communication with the connection pipe (1), wherein the seal ring (123) is put from the positioning orifice (122) of the connection pipe (1) to contact with the contact fringe (23) of the turning-on mechanism (2).

4. The air pipe device of an air compressor as claimed in claim 1, **characterized in that** a connection pipe (4) includes a flexible hose (40), a resilient cylinder (3) fitted on the flexible hose (40), wherein the connection pipe (1) includes the open segment (11) defined on the first end thereof and having male threads (111), the connection pipe (1) has the check mechanism (112) received therein and an air core (114) mounted on the check mechanism (112) so as to screw with the connector (93) of the air pipe (92) of the air compressor, the stop segment (12) has female threads (121) formed on an inner wall thereof and accommodates the turning-on mechanism (2) having a post (24), and the stop segment (12) of the connection pipe (1) is connected with a second air nozzle (86) of the external tire (85).

5. The air pipe device of an air compressor as claimed in claim 4, **characterized in that** the check mechanism (7) includes a fitting shaft (71) formed on a first end thereof, a male threaded section (72) formed on the fitting shaft (71), and a stepped coupling section (73) extending from a second end of the fitting shaft (71) opposite to the fitting shaft (71), wherein the stepped coupling section (73) of the fitting shaft (71) is fitted on the open segment (41) of the flexible hose (40), and a first defining sleeve (31) is configured to connect the flexible hose (40) with the stepped coupling section (73) of the fitting shaft (70),
wherein the turning-on mechanism (5) includes a bushing (50), a column (61), a seal ring (123), an accommodation chamber (51) defined in the bushing (50), a threaded screw orifice (52) formed on an inner wall of a first end of the bushing (50), a passing orifice (53) defined on a second end of the bushing (50), and a neck (54) formed adjacent to the passing orifice (53), wherein a diameter of the neck (54) is more than a diameter of the passing orifice (53), and the threaded screw orifice (52), the accommodation chamber (51) and the passing orifice (53) communicate,
wherein the column (61) has an annular section (62) extending from the column (61), wherein a diameter of the annular section (62) is less than a diameter of the column (61), and a contact fringe (63) is formed between the annular section (62) and the column (61), a post (64) extends from the annular section (62), at least one conduit (65) is defined between the post (64) and the annular section (62), a stepped coupling section (66) extends opposite to the column (61), a recessed section (67) formed on an outer wall of the column (61) proximate to the stepped coupling section (66), wherein a diameter of the column (61) is more than a diameter of the recessed section (67), and a joining shoulder (68) is formed on the recessed section (67) and the column (61), wherein a channel (69) defined between the column (61) and the stepped coupling section (66), and the at least one conduit (65), the channel (69) and the flexible hose (40) communicate, wherein a seal ring (123) is put from the column (64) to contact with the contact fringe (63) of the column (61), the stepped coupling section (66) of the column (61) connected with the seal ring (123) is received in the accommodation chamber (51) from the threaded screw orifice (52) of the bushing (50) via the passing orifice (53) of the neck (54), wherein the neck (54) abuts against the joining shoulder (68) of the column (61), the stepped coupling section (66) of the column (61) exposing outside the bushing (50) is fitted with the stop segment (42) of the flexible hose (40), and a first defining sleeve (32) is configured to connect the flexible hose (40) with the stepped coupling section (66) of the column (61), the check mechanism (7) closes the valve (75) of the air core (74) completely.

6. The air pipe device of an air compressor as claimed in claim 3, **characterized in that** the connection pipe (1) is inserted through a through orifice (83) of a rim of the external tire (85) to contact with the first air nozzle (8) of the internal tire (80), the stop segment (12) of the connection pipe (1) is connected with the first air nozzle (8) of the internal tire (80), and the open segment (11) of the connection pipe (1) is connected with the connector (93) of the air pipe (92) of the air compressor.

7. The air pipe device of an air compressor as claimed in claim 5, **characterized in that** the second air nozzle (86) of the external tire (85) faces a central axis of a vehicle, wherein the second air nozzle (86) is back to the user's eyes, so the stop segment (42) of the flexible hose (40) is connected with the second air nozzle (86) of the external tire (80), and the post (64) of the turning-on mechanism (5) abuts against and moves the air core (87) of the first air nozzle (86) of the external tire (85) so that when the valve (88) of the first air nozzle (86) is turned on, the second air nozzle (86) of the external tire (85) communicates with the flexible hose (40), wherein the valve (88) of the first air nozzle (86) of the external tire (85), the at least one conduit (65) and the channel (69) of the column (61) of the stop segment (42), and the flexible hose (40) communicate,
wherein the open segment (41) of the flexible hose (40) is configured to avoid a leakage of the airs from the external tire (85) so that after the stop segment (42) of the flexible hose (40) is connected with the second air nozzle (86) of the external tire (85), the open segment (41) of the flexible hose (40) is rotated outside the external tire (85), in the meantime, the flexible hose (40) is protected by the resilient cylinder (3) so that the flexible hose (40) does not bend to block the sealant and the airs, thereafter the connector (93) of the air pipe (92) of the air compressor is connected with the open segment (41) of the flexible hose (40), and the connector (93) abuts against the check mechanism (7) of the open segment (41) to turn on the valve (75) of the air core (74), thus feeding the sealant and inflating the airs.

8. An air pipe device of an air compressor, the air compressor being received in a box (9), and a connector (93) of an air pipe (92) outputting fluid pressure from the air compressor so as to inflate airs and to feed sealant when the air compressor operates,
**characterized in that** the air pipe device includes a connection pipe (1) and a flexible hose (40) which are connected with a first air nozzle (8) of the internal tire (80) and a second air nozzle (86) of the external tire (85), wherein the connection pipe (1) is rigid and is configured to connect the first air nozzle (8) of the internal tire (80) with the connector (93) of the air pipe (92), and the flexible hose (40) is configured to connect the second air nozzle (86) of the external tire (85) with the connector (93) of the air pipe (92), thus inflating airs into the internal tire (80) and the external tire (85).

9. The air pipe device of an air compressor as claimed in claim 8, **characterized in that** the box (9) includes a sealant supply (91) configured to supply sealant.
